Europäisches Patentamt

European Patent Office

Office européen des brevets

(19)

(11) Veröffentlichungsnummer: **0 012 231**
**B1**

(12) **EUROPÄISCHE PATENTSCHRIFT**

(45) Veröffentlichungstag der Patentschrift: **22.06.83**

(51) Int. Cl.³: **A 47 J 37/07**

(21) Anmeldenummer: **79104514.9**

(22) Anmeldetag: **15.11.79**

(54) Zusammenlegbarer, tragbarer Grill mit höhenverstellbarem Rost.

(30) Priorität: **15.11.78 DE 2849626**

(43) Veröffentlichungstag der Anmeldung:
**25.06.80 Patentblatt 80/13**

(45) Bekanntmachung des Hinweises auf die Patenterteilung:
**22.06.83 Patentblatt 83/25**

(84) Benannte Vertragsstaaten:
**AT BE CH DE FR GB IT NL SE**

(56) Entgegenhaltungen:
**DE - U - 7 015 790**
**FR - A - 2 058 900**
**US - A - 2 213 483**
**US - A - 2 472 164**
**US - A - 2 679 243**

(73) Patentinhaber: **Dittmer, Ellen**
**Urspringerstrasse 2**
**D-8021 Strasslach (DE)**
(73) Patentinhaber: **Pietryga, Lothar**
**Krüner Strasse 43**
**D-8000 München 70 (DE)**

(72) Erfinder: **Dittmer, Ellen**
**Urspringerstrasse 2**
**D-8021 Strasslach (DE)**
Erfinder: **Pietryga, Lothar**
**Krüner Strasse 43**
**D-8000 München 70 (DE)**

(74) Vertreter: **Wager, Peter Dr. Dipl.-Chem.**
**Morassistrasse 8/II**
**D-8000 Munchen 5 (DE)**

Courier Press, Leamington Spa, England.

Zussammenlegbarer, tragbarer Grill mit höhenverstellbarem Rost

Die Erfindung betrifft einen zusammenlegbaren, tragbaren Grill gemäß dem Oberbegriff des Patentanspruchs 1.

Aus US—A—2 679 243 ist ein zusammenlegbarer, tragbarer Grill mit einer an der Oberseite des Rahmens angeordneten, klappbaren und in der Höhe verstellbaren Rosttrageeinrichtung mit einem Rost, einem an einer Seite des Rahmens angeordneten Tragegriff, vier an der Unterseite des Rahmens klappbar angeordneten Füßen und einer in den Rahmen einsetzbaren Feuerungseinrichtung bekannt. Zum Verstellen und Fixieren der Rosttrageeinrichtung sind jedoch sperrige Bügel vorgesehen, die den Platzbedarf des aufgestellten Grills erhöhen und gegen die man leicht stößt. Beim Zusammenklappen des Rostteiles ist wegen vier an der Breitseite des Rahmens angelenkter Stützen des Rostes und der beiden erwähnten Verstellbügel, die sämtlich im zusammengeklappten Zustand unmittelbar neben den Rahmenbreitseiten und parallel dazu zu liegen kommen, eine beträchtliche Quetschgefahr gegeben. Die vier Füße müssen außerdem einzeln zusammengeklappt werden, und die Feuerrungseinrichtung ist als Wanne ausgebildet, deren starre Wände beim Zusammenlegen die Bildung eines flachen Pakets verhindern.

Aus US—A—2 213 483 ist ein Grill mit einem Rost bekannt, der durch eine Drehstange über Ketten auf- und abwärtsbewegbar ist; jedoch ist das Grillgerät nicht als Ganzes zusammenlegbar, sondern nur in viele, zum Teil sehr sperrige, zum Teil sehr kleine Einzelteile (Schrauben usw.) zerlegbar, die leicht verlorengehen können. Die Feuerung ist als Kasten ohne Boden ausgebildet, so daß der Grill beispielsweise nicht auf Rasen oder einer Holzunterlage aufstellbar ist und auch andere Ausstellflächen verschmutzt werden.

Aufgabe der Erfindung ist daher die Bereitstellung eines sowohl einfach, rasch und flach zusammenkappbaren und bequem transportierbaren als auch standfesten, leicht zu reinigenden und eine gesteuerte Hitzeeinwirkung auf das Grillgut zulassenden Grills.

Diese Aufgabe wird bei einem Grill der im Oberbegriff des Patentanspruchs 1 definierten Gattung erfindungsgemäß durch die im kennzeichnenden Teil des Patentanspruchs 1 angegebenen Merkmale gelöst.

Eine bevorzugte Ausführungsform des erfindungsgemäßen Grills wird im folgenden an Hand von Zeichnungen näher erläutert, worin

*Fig. 1* eine perspektivische Ansicht des erfindungsgemäßen Grills in betriebsfertiger Stellung,

*Fig. 2* eine perspektivische Ansicht des erfindungsgemäßen Grills in zusammengeklaptem Zustand,

*Fig. 3* eine perspektivische Ansicht des erfindungsgemäßen Grills mit herausgenommener Feuerungsplatte und abgenommenem Rost sowie abgenommener Drehstange,

*Fig. 4* eine Draufsicht auf den Feststellmechanismus der Drehstange sowie,

*Fig. 5* eine Draufsicht auf den Verriegelungsmechanismus für den zusammengeklappten Grill bedeuten.

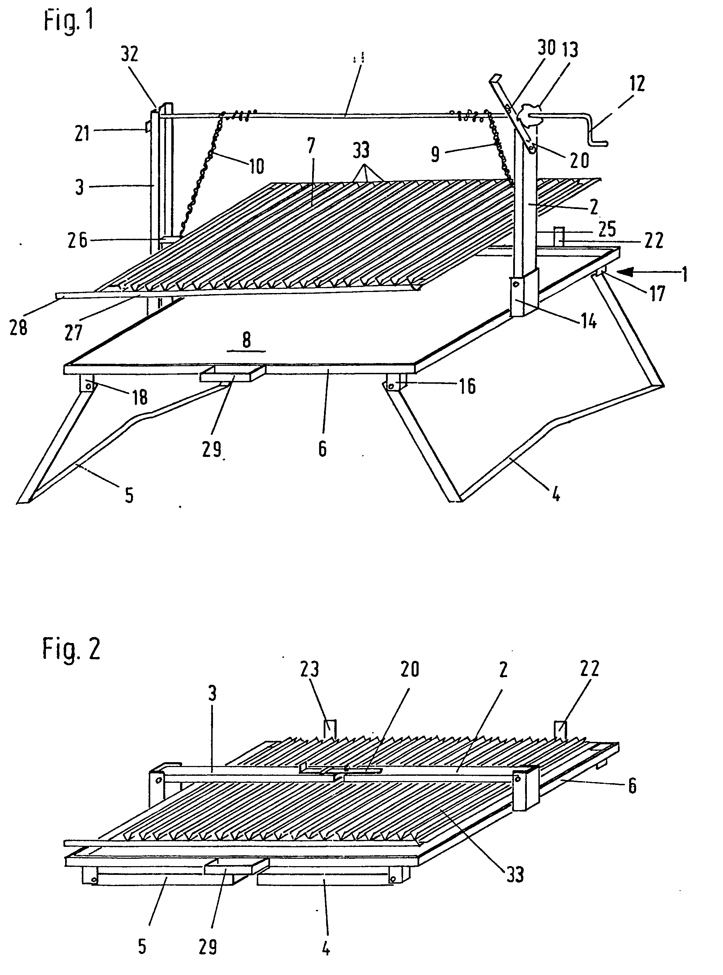

Gemäß Fig. 1 besteht der Grill 1 aus einem Rahmen 6 mit zwei U-förmigen Doppelfüßen 4 und 5, zwei an zwei gegenüberliegenden Seiten des Rahmens 6 angeordneten, nach oben weisenden Führungsschienen 2 und 3, ferner aus einem in diese Schienen einhängbaren Rost 7, der von einer in den Oberteil der Führungsschienen einsetzbaren Drehstange 11 mittels Halterungsketten 9 und 10 gehaltert wird, sowie einem in den Rahmen 6 einsetzbaren Feuerungsblech 8.

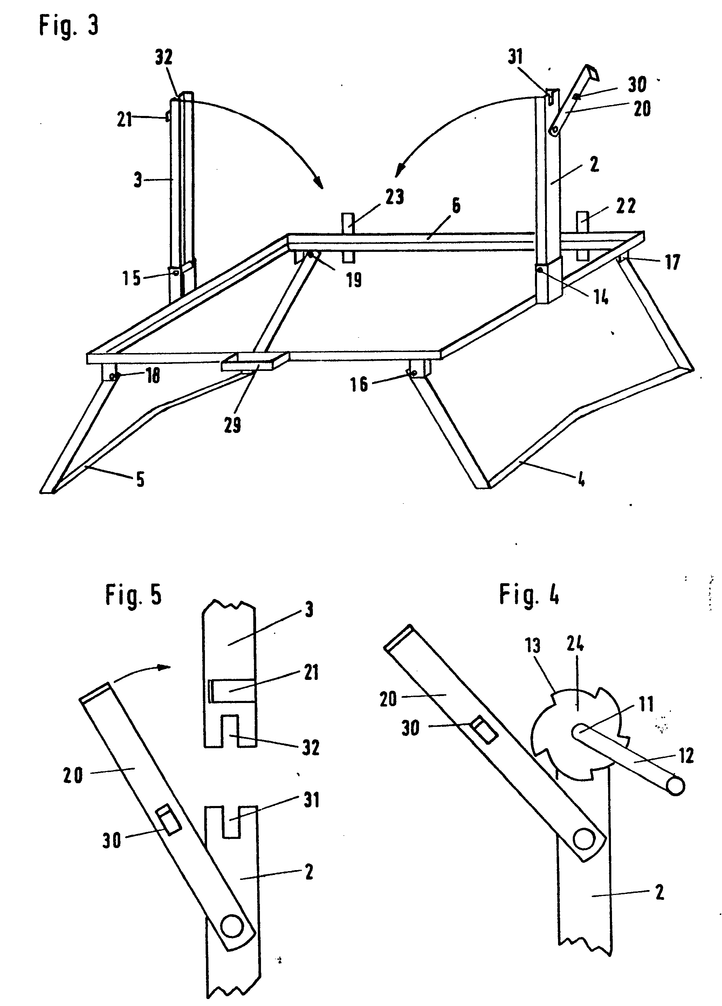

Der Rahmen 6 besitzt vorzugsweise rechteckige Gestalt und besteht aus Winkeleisen von L-förmigem Querschnitt, wobei der Scheitelpunkt des Winkels nach unten und außen zeigt. An je zwei gegenüberliegenden Stellen der Längsseiten des Rahmens sind die Schenkel von je einem U-förmigen Doppelfuß befestigt, die kurz unterhalb des Rahmens je eine Gelenk 16, 17, 18, 19 (Fig. 3) aufweisen, die sie dazu befähigen, einerseits nach außen zur Erzielung einer optimalen Standfestigkeit des Grills abgespreizt und andererseits nach innen, d.h. nach der Mitte des Rahmens zu umgeklappt zu werden.

Unter der U-förmigen Ausbildung des Doppelfußes ist im vorliegenden Fall eine solche zu verstehen, bei der die beiden U-Schenkel nicht in eine Rundung übergehen, sondern zwischen sich ein annähernd waagerecht geführtes Zwischenstück aufweisen, das in seiner Mitte etwas nach oben gebogen ist, so daß etwa unter den Ecken des Rahmens 6 Aufstandsstellen gebildet werden.

In der Mitte der beiden Schmalseiten des Rahmens 6 sind sich nach oben erstreckende Führungsschienen 2 und 3 angebracht, die aus U-förmigem Profil bestehen und ebenfalls nicht weit vom Rahmen 6 entfernt je ein Gelenk 14, 15 (Fig. 3) aufweisen, das sie befähigt, von der einen extremen, nämlich der vertikalen Stellung aus nach innen in die andere extreme, nämlich in die zum Rahmen parallele Lage umgeklappt zu werden. Die Führungsschienen 2 und 3 besitzen einen rechteckig U-förmigen Querschnitt, wobei die Querseite zwischen den U-Schenkeln jeweils nach außen weist. An ihren freien Enden weisen die Führungsschienen in der Mitte der Querseite des U-Profils nach dem freien Ende der Führungsschienen offene Schlitze 31 und 32 auf. Unterhalb dieser Schlitze weist die eine Führungsschiene 2 an ihrer Außenseite einen an seinem einen Ende befestigten und um diesen Befestigungspunkt frei drehbaren Riegel 20 auf, während die andere

Führungsschiene 3 an der entsprechenden Stelle mit einem Verriegelungshaken 21 versehen ist. Zwischen den Führungsschienen befindet sich über dem Rahmen 6 der ebenfalls rechteckige Grillrost 7 mit gekehlten Roststäben 33 im üblichen, für die Auflage des Grillgutes geeigneten Abstand voneinander und mit einer an der einen Längsseite unter den Enden der Roststäbe 33 angeordneten Ablaufrinne 27, die an einer Seite mit einem etwas über die Rostlänge hinaus verlängerten Ende 28 versehen ist. Jede der Schmalseiten des Rostes 7 ist in der Mitte mit einer Führungsnase 25, 26 versehen, die so geformt ist, daß sie genau in das U-Profil der Führungsschienen 2, 3 hineinpaßt.

Nicht weit von diesen Nasen, jedoch deutlich außermittig ist an der Schmalseite des Rostes 7 auf der der Ablaufrinne 27 abgewandten Seite je eine Halterungskette 9, 10 befestigt, wobei beide Ketten nach oben zu einer durch die Schlitze 31, 32 der Führungsschienen 2 und 3 gelegten Drehstange 11 geführt und um diese aufwickelbar sind. Zu diesem Zweck besitzt die Drehstange 11 an ihrem einen Ende eine Handkurbel 12 sowie an den Stellen, an denen sie in den Schlitzen 31 und 32 der Führungsschienen 2 und 3 geführt ist, nicht dargestellte periphere Führungsrillen, damit ein unbeabsichtigtes Herausgleiten der Stange 11 aus ihren Auflagern während der Drehbewegung verhindert wird.

Von den beiden Ketten 9 und 10 ist diejenige, die sich auf der Seite des verlängerten Endes 28 der Ablaufrinne 27 befindet, etwas länger, so daß dadurch sowie durch die außermittige Aufhängung der Ketten der Rost 7 einerseits in Richtung auf die Ablaufrinne 27 und andererseits in Richtung auf das überstehende Ende 28 der Ablaufrinne 27 leicht nach unten geneigt ist.

Zur Begrenzung der Drehbewegung ist an der Drehstange 11 außerhalb einer der Führungsschienen 2 oder 3 ein Feststellen 13 angebracht, etwa in Form eines Zahnkranzes 24 (Fig. 4) in den eine ebenfalls außen an derselben Führungsschiene oberhalb des Zahnkranzes oder an dem Riegel 20 befestigte Sperrklinke 30 eingreifen kann. Wird die Sperrklinke durch Rückwärtsklappen um ihren Befestigungspunkt bzw. durch Seitwärtsschwenken des Riegels 20 aus dem Zahnkranz entfernt, so setzt sie dem durch das Gewicht des Rostes bewirkten Abwickeln der Ketten 9 und 10 und damit der Drehbewegung der Drehstange 11 keinen Widerstand entgegen, so daß sich der Rost in den Führungsschienen 2 und 3 nach unten bewegt. Durch Drehen der Kurbel 12 in entgegengesetzter Richtung wird entsprechend die Aufwärtsbewegung des Rostes 7 bewirkt.

An einer der Längsseiten des Rahmens 6 ist ferner ein Tragegriff 29 angebracht, während an der gegenüberliegenden Seite zu beiden Seiten der Mitte von dem Rahmen 6 nach oben und unten vorstehende Halterungsstege 22, 23 (Fig. 3) angebracht sind.

Zum Zusammenklappen des Grills wird zunächst der Rost 7 abgesenkt und die Drehstange 11 mitsamt den Ketten 9 und 10 auf den in dem Rahmen befindlichen Rost 7 gelegt. Danach werden die Füße 4 und 5 nach innen geklappt und schließlich ebenfalls die Führungsschienen 2 und 3. Zuletzt werden die Führungsschienen mit Hilfe des Riegels 20 und Verriegelungshakens 21 (Fig. 5) miteinander fest verbunden, so daß sämtliche losen Teile zwischen dem Rahmen 6 und den verriegelten Führungsschienen 2 und 3 festgehalten werden. Faßt man den zusammengelegten Grill am Griff 29, so können die festgehaltenen losen Teile auch nicht nach unten herausfallen, weil sie durch die Halterungsstege 22 und 23 daran gehindert werden (Fig. 2).

In einer bevorzugten Ausführungsform des Grills sind sämtliche Teile, die mit dem Grillgut einschließlich dem daraus abtropfenden oder ablaufenden Fett in Berührung kommen können, wie Roststäbe 33, Ablaufrinne 27 und Feuerungsblech 8, emailliert. Dadurch wird die rasche Zusammenlegbarkeit und gute Transportierbarkeit des Grills weiter verbessert, weil sich die emaillierten Teile im Gegensatz zu nichtemaillierten leicht säubern lassen, was für einen sauberen Transport von Bedeutung ist.

Durch die U-förmigen Doppelfüße, die außerdem noch sehr weit abgespreizt sind, erhält der Grill eine gegenüber herkömmlichen Grills wesentlich erhöhte Standfestigkeit, wodurch er auch gut auf unebenem Boden, wie Terrassen oder Rasenflächen, steht.

Durch das Zusammenklappen wird der Grill derartig flach, daß siene Höhe nur noch etwa ein Zehntel seiner Länge beträgt. Damit ist er wie ein Koffer bequem zu tragen. Das Zusammenklappen kann in kürzester Zeit erfolgen.

Durch den höhenverstellbar angeordneten Rost kann auch der Tatsache Rechnung getragen werden, daß Holzkohlenglut über längere Zeit hinweg keine konstante Hitze abgibt.

Der nichtemaillierte Teil des Grills besteht zweckmäßigerweise aus eloxierten Blech. Sowohl die emaillierten als auch die eloxierten Teile rosten nicht und gewährleisten dadurch eine lange Lebensdauer des Grills.

Die einzelnen Stäbe 33 des Rostes 7 sind zweckmäßig als Winkeleisen mit V-förmigem Querschnitt ausgebildet, wie dies bereits aus den obenerwähnten Offenlegungsschriften bekannt ist. Auf diese Weise wird sichergestellt, daß das Fett in den dadurch gebildeten Rinnen rasch und vollständig ablaufen kann und nicht in das Feuer tropft, wodurch bekanntlich ebenfalls gesundheitsschädliche Stoffe entstehen können. Die Sammelrinne 27 an der tieferen Seite des Rostes 7 ist, wie oben beschrieben, vorzugsweise ebenfalls geneigt, so daß an ihrem verlängerten Ende 28 ein Gefäß zum Auffangen des ablaufenden Fettes angeordnet werden kann.

## Patentansprüche

1. Zusammenlegbarer, tragbarer Grill mit einem Rahmen (6), einer an der Oberseite des Rahmens (6) angeordneten, klappbaren und in der Höhe verstellbaren Rosttrageeinrichtung (2, 3, 9, 10, 11), einem Rost (7), einem an einer Seite des Rahmens angeordneten Tragegriff (29), an der Unterseite des Rahmens klappbar angeordneten Füßen (4, 5) und einer in den Rahmen einsetzbaren Feuerungseinrichtung (8), dadurch gekennzeichnet, daß die Rosttrageeinrichtung zwei auf einander gegenüberliegenden Seiten des Rahmens (6) angeordnete, über Gelenke (14, 15) nach innen klappbare und in zusammengeklapptem Zustand miteinander verriegelbare Führungsschienen (2, 3) aufweist, der Rost (7) mit zwei in die Führungsschienen (2, 3) eingreifenden Führungsnasen (25, 26) versehen und durch zwei an ihm befestigte, um eine Drehstange (11) aufwickelbare Halterungsketten (9, 10) auf- und abwärtsbewegbar ist, wobei die Drehstange (11) zwischen die Führungsschienen (2, 3) an deren freien Enden einsetzbar sowie mit einer Handkurbel (12) und einem Feststeller (13) versehen ist, die Feuerungseinrichtung als Platte (8) ausgebildet ist, auf der dem Tragegriff (29) gegenüberliegenden Seite des Rahmens (6) zwei nach oben und unten über den Rahmen hinausragende Halterungsstege (22, 23) angeordnet sind, die im zusammengeklappten Zustand des Grills verhindern, daß lose Teile herausfallen, und die Füße als U-förmige Doppelfüße (4, 5) ausgebildet sind.

2. Grill nach Anspruch 1, dadurch gekennzeichnet, daß die Halterungsketten (9, 10) an je einer Schmalseite des Rostes (7) leicht außermittig befestigt sind.

3. Grill nach Anspruch 1 oder 2, dadurch gekennzeichnet, daß die Halterungsketten (9, 10) verschieden lang sind.

4. Grill nach einem der vorhergehenden Ansprüche, dadurch gekennzeichnet, daß der Rost (7) an einer Breitseite mit einer an einer Seite über die Rostlänge verlängerten Ablaufrinne (27) versehen ist.

5. Grill nach einem der vorhergehenden Ansprüche, dadurch gekennzeichnet, daß der Feststeller (13) aus einem auf der Drehstange (11) befestigten Zahnkranz (24) und einer an der einen Führungsschiene (2) beweglich angeordneten Sperrklinke (30) besteht.

6. Grill nach einem der vorhergehenden Ansprüche, dadurch gekennzeichnet, daß an dem freien Ende der einen Führungsschiene (2) ein Riegel (20) und an dem freien Ende der anderen Führungsschiene (3) ein Verriegelungshaken (21) angeordnet sind.

7. Grill nach einem der vorhergehenden Ansprüche, dadurch gekennzeichnet, daß Feuerungsplatte (8) und Rost (7) emailliert sind.

## Revendications

1. Rôtissoire repliable et portable, comportant un bâti (6), un dispositif de support de grille (2, 3, 9, 10, 11) disposé sur la face supérieure du bâti (6), rabattable et réglable en hauteur, une grille (7), une poignée de transport (29) disposée sur un côté du bâti, des pieds (4, 5) disposés de façon rabattable sur la face inférieure du bâti et une installation de chauffage (8) pouvant être insérée dans le bâti, laquelle rôtissoire est caractérisée en ce que le dispositif porte-grille comporte deux rails de guidage (2, 3) disposés sur des côtés opposés du bâti (6), rabattables ver l'intérieur grâce à des articulations (14, 15) et verrouillables l'un à l'autre à l'état replié, la grille (7) est pourvue de deux talons de guidage (25, 26) qui viennent en prise dans les rails de guidage (2, 3) et peut être montée et abaissée par deux chaînes de support (9, 10) fixées à la grille et pouvant s'enrouler autour d'une tige rotative (11), la tige rotative (11) pouvant être insérée entre les rails de guidage (2, 3) à leurs extrémités libres et étant munie d'une manivelle (12) et d'un dispositif de blocage (13), l'installation de chauffage étant réalisée sous la forme d'une plaque (8), deux traverses de maintien (22, 23) étant montées, du côté du bâti opposé à la poignée de transport (29), qui font saillie du bâti vers le haut et le bas et qui empêchent, dans l'état replié de la rôtissoire, que des pièces libres ne tombent, et les pieds sont réalisés sous forme de pieds doubles (4, 5) en forme d'U.

2. Rôtissoire selon la revendication 1, caractérisée en ce que les chaînes de support (9, 10) sont fixées de façon légèrement excentrée chacune à un petit côté de la grille (7).

3. Rôtissoire selon la revendication 1 ou 2, caractérisée en ce que les chaînes de support ont des longueurs différentes.

4. Rôtissoire selon l'une des revendications précédentes, caractérisée en ce que la grille (7) est équipée sur l'un de ses grands côtés, d'une rigole d'écoulement (27) qui se prolonge d'un côté, au-delà de la longueur de la grille.

5. Rôtissoire selon l'une des revendications précédentes, caractérisée en ce que le dispositif de blocage (13) est constitué par une couronne dentée fixée sur la tige rotative (11) et par un cliquet de verrouillage (30) monté de façon mobile sur l'un des rails der guidage (2).

6. Rôtissoire selon l'une des revendications précédentes, caractérisée en ce qu'un verrou (20) est disposé à l'extrémité libre de l'un des rails de guidage (2) et en ce qu'un crochet de verrouillage (21) est disposé à l'extrémité libre de l'autre rail de guidage (3).

7. Rôtissoire selon l'une des revendications précédentes, caractérisée en ce que la plaque (8) de foyer et la grille (7) sont émaillées.

## Claims

1. A collapsible, portable barbecue grill including a frame member (6) with a grill supporting means (2, 3, 9, 10, 11) hingedly attached to the upper side of said frame member (6) for being folded together and adapted to be adjustable in height, a grill means (7), a grip (29) attached to one side of said frame member, legs (4, 5) hingedly attached to the bottom side of the frame member for being folded together, and a fuel tray device (8) capable of being inserted in the frame member, characterized in that said grill supporting means has two guide rails (2, 3) positioned on opposed sides of the frame member (6), which guide rails can be folded inwardly by means of hinges (14, 15) and are lockable together while hinged; that said grill means (7) comprises two guide noses (25, 26) engaging said guide rails (2, 3), said grill means (7) being further adapted to be raised or lowered by means of two holding chains (9, 10) attached thereto and being windable around a rotary bar (11) which is suitable for being inserted between the free ends of said guide rails (2, 3) and includes a crank handle (12) and a shift lock (13); that said fuel tray device constitutes a plate (8); that two holding bars (22, 23) extending beyond said frame member in an upward and downward direction and, while the barbecue grill is in its collapsed state, preventing loose elements from dropping out are attached to the side of said frame member (6) facing said grip (29); and that said legs are in the form of U-shaped double legs (4, 5).

2. The barbecue grill in accordance with claim 1, characterized in that said holding chains (9, 10) are fastened slightly off-center to each of the narrow sides of said grill means (7).

3. The barbecue grill in accordance with claim 1 or 2 characterized in that said holding chains (9, 10) are of different length.

4. The barbecue grill in accordance with one of the preceding claims characterised in that said grill means (7) comprises an elongated discharge channel (27) on one of its long sides, one of the ends of said channel extending beyond the length of said grill means.

5. The barbecue grill in accordance with one of the preceding claims characterized in that said shift lock (13) comprises a gear rim (24) attached to said rotary bar (11) and a pawl (30) pivotally mounted to one of said guide rails (2).

6. The barbecue grill in accordance with one of the preceding claims characterized in that a locking bar (20) is provided on the free end of one of said guide rails (2) and a latch (21) is provided on the free end of said other guide rail (3).

7. The barbecue grill in accordance with one of the preceding claims characterized in that said fuel tray (8) and said grill means (7) are enamel-coated.

**Fig. 1**

**Fig. 2**

Fig. 3

Fig. 5

Fig. 4